# EUROPÄISCHE PATENTSCHRIFT

(11) **EP 2 175 286 B1**
(45) Veröffentlichungstag und Bekanntmachung des Hinweises auf die Patenterteilung: **08.04.2015**
(21) Anmeldenummer: 08017867.6
(22) Anmeldetag: 11.10.2008
(51) Int. Cl.: G01Q 70/08, G01Q 70/16

(54) **Verfahren zur Herstellung einer SPM-Sonde mit Abtastspitze und mit einer der Abtastspitze gegenüberliegenden Justierhilfe**
Method for producing a SPM probe with a sampling tip and adjustment aid opposite the sampling tip
Procédé de fabrication d'une sonde SPM dotée d'une pointe de balayage et d'une aide à l'alignement installée à l'opposé de la pointe de balayage

(43) Veröffentlichungstag der Anmeldung: 14.04.2010
(73) Patentinhaber: NanoWorld AG, 2007 Neuchâtel (CH)
(72) Erfinder: Sulzbach, Thomas, 91085 Weisendorf (DE); Krause, Oliver, 91052 Erlangen (DE); Burri, Mathieu, 3235 Erlach (CH); Detterbeck, Manfred, 8280 Kreuzlingen (DE); Irmer, Bernd, 81369 München (DE); Penzkofer, Christian, 81249 München (DE)
(74) Vertreter: Klocke, Peter

(56) Entgegenhaltungen:
- EP-A- 0 394 962
- DE-A1- 4 126 151
- JP-A- 9 204 898
- JP-A- 10 123 154
- JP-A- 2003 315 238
- US-A- 5 883 387
- GERHARD WAHRIG: "DEUTSCHES WÖRTERBUCH" 1997, BERTELSMANN LEXIKON VERLAG GMBH , GÜTERSLOH , XP002526308 ISBN: 3-577-10677-8 Artikel "ausnehmen" * Seite 234, Spalte 3 *

## Beschreibung

### Beschreibung

Die Erfindung betrifft ein Verfahren zur Herstellung einer SPM-Sonde, die ein Halteelement, einen Federbalken, eine Abtastspitze und eine als Erhöhung ausgebildete Markierung auf der der Abtastspitze gegenüberliegenden Seite des Federbalkens aufweist, wobei die Markierung die Position der Abtastspitze eindeutig kennzeichnet. Dabei wird das Halteelement mit dem Federbalken in herkömmlicher Weise vorgefertigt und anschließend die Abtastspitze und die Markierung durch eine gasinduzierte Materialabscheidung auf dem Federbalken erzeugt.

SPM-Sonden sind allgemein in einer Vielzahl von unterschiedlichsten Ausführungsformen bekannt und werden in Verbindung mit Rastersondenmikroskopen eingesetzt, um die Oberfläche von Sonden mit hoher Auflösung abzutasten. Übliche SPM-Sonden weisen einen Federbalken auf, an dessen einem Ende ein Halteelement zur Fixierung der SPM-Sonde an einer Haltevorrichtung des Rastersondenmikroskops angeordnet ist und aus dessen anderem Ende, auf der der Probe zugeordneten Unterseite, eine feine Abtastspitze zum Abtasten der Probe hervortritt.

Bei der Rastersondenmikroskopie wird die Abtastspitze so nahe an die zu untersuchende Oberfläche der Probe herangebracht, bis die Sonde in Wechselwirkung mit der zu untersuchenden Oberfläche tritt. Aufgrund der zwischen der Abtastspitze und der Oberfläche wirkenden Kräfte wird der Federbalken der SPM-Sonde ausgelenkt und die Auslenkung detektiert. Die Rastersondenmikroskopie (Scanning Probe Microscopy - SPM) hat sich zu einer etablierten Oberflächenanalysetechnik entwickelt, die unter anderem eine Abbildung von Oberflächentopographien mir einer Auflösung von wenigen Nanometern oder sogar bis in den atomaren Bereich hinein erlaubt.

Ein wesentliches Kernelement dieser Technik ist die Abtastsonde. Die Beschaffenheit und Qualität der Sonden trägt maßgeblich zur erzielbaren Auflösung der Oberflächenanalyse bei. Die Auflösung wird hierbei im wesentlichen durch die Geometrie des Federbalkens sowie der an dem Halteelement ausgebildeten Abtastspitze bestimmt. Für die Herstellung der Sonden haben sich unterschiedliche Verfahren etabliert, die entweder auf der Ätzung von einkristallinem Silizium basieren oder auf dünnen Schichten bevorzugt aus Siliziumnitrid.

Die Abtastspitze am freien Ende des Federbalkens, deren Form und Krümmungsradius wesentlich zur Qualität der Abbildung beiträgt, wird in der Regel durch Ätzen aus einem massiven Ausgangsmaterial (in der Regel einkristallines Silizium) oder durch Abformungstechniken (Siliziumnitrid) realisiert, wobei die höhere Qualität der Abtastspitze (kleiner Krümmungsradius, hohes Aspektverhältnis, große Spitzenhöhe) mittels Ätztechniken erzielt wird.

In einem weiteren Verfahren werden aber auch fokussierter Strahlen geladener Teilchen (Elektronen- oder lonenstrahlen) eingesetzt, um die Abtastspitzenform für die jeweilige Anwendung zu optimieren. Etabliert hat sich dabei der gezielte Abtrag von Spitzenmaterial mittels fokussierten lonenstrahlen ("focussed ion beam - FIB") und das lokale Aufwachsen von Material mittels elektronenstrahlinduzierter Abscheidung ("electron beam induced deposition - EBID"), aber auch die Abscheidung mittels Ionenstrahlinduzierung und der Abtrag durch Elektronenstrahlen sind üblich.

Die Technik zur Herstellung von Abtastspitzen mittels Ätzung aus einkristallinem Silizium und die Technik zur Erzeugung von Abtastspitzen mittels lokaler Materialabscheidung bieten aber erhebliche Vorteile gegenüber der auf Dünnschichttechnik basierenden Abformungstechnik, wie sie beispielsweise in der DE 41 26 151 C2 beschrieben ist. Durch den monokristallinen Aufbau von Abtastspitze und Federbalken bei der Ätztechnik sind intrinsische Materialspannungen und daraus resultierende Verbiegungen des Federbalkens ausgeschlossen. Solche Spannungen sind bei abgeschiedenen Dünnschichten nie gänzlich zu vermeiden und die Minimierung der resultierenden Federbalken-Verbiegung stellt die größte Schwierigkeit der Abformtechnologie dar. Zudem ist das Aspektverhältnis der geätzten Silizium-Abtastspitzen in der Regel größer und damit besser als das der abgeformten Abtastspitzen.

Im Hinblick auf kleine, hochfrequente Federbalken, bei denen die Abtastspitzengröße reduziert werden muss, bietet die Ätztechnik ebenfalls Vorteile. Da die lithographisch definierte Maskierung bei dieser Technik unterätzt wird, lassen sich bei begrenzter Auflösung der Lithographie kleinere Abtastspitzen realisieren, als bei der Abformtechnik, bei der die Auflösung der Lithographie das Sockelmaß der Abtastspitze und damit ihre minimale Größe begrenzt.

Der Vorteil der Anwendung von fokussierten Teilchenstrahlen zur Optimierung der Abtastspitzen von SPM-Sonden gilt beispielsweise für SPM-Sonden mit Federbalken aus monokristallinem Silizium. Besondere Vorteile hat dieses Verfahren aber bei der Realisierung von sehr kleinen Federbalken, die für eine zukünftige Generation von Rastersondenmikroskopen mit deutlich erhöhter Abtastgeschwindigkeit benötigt werden und eine Federbalkenlänge von weniger als 50 µm, typischerweise sogar weniger als 10 µm aufweisen. Da auch bei diesen Federbalken die Masse der Abtastspitze deutlich unter der Masse des eigentlichen Federbalkens liegen muss, um die Schwingungseigenschaften nicht negativ zu beeinflussen, ist eine angepasste, kleine Abtastspitzenhöhenotwendig, deren Realisierung und exakte Positionierung auf dem Federbalken mit konventionellen Methoden kaum erreichbar ist. Mittels fokussierten Teilchenstrahlen hingegen lassen sich gezielt Strukturen in der Größenordnung von 10 nm realisieren, wobei durch kontrollierte, elektrische und magnetische Ablenkung des Teilchenstrahls eine Positioniergenauigkeit von wenigen Nanometern erzielen lässt.

Sowohl bei der Rastertunnelmikroskopie wie auch bei der Rasterkraftmikroskopie kann es vorkommen, dass die Abtastspitze der SPM-Sonde beim Abtasten der Probenoberfläche verschlissen oder beschädigt wird, so dass die SPM-Sonde ausgetauscht werden muss. Beim Sondenwechsel muss die Abtastspitze exakt an der Stelle der beschädigten Abtastspitze positioniert werden, damit die unterbrochene Messung unmittelbar dort fortgesetzt werden kann, wo sie abgebrochen wurde. Daher ist eine hohe Genauigkeit beim Ausrichten der neu eingesetzten Sonde notwendig. Die exakte Ausrichtung des Federbalkens mit der daran befestigten Abtastspitze ist jedoch dadurch erschwert, dass die Abtastspitze von dem Federbalken verdeckt ist. Eine Markierung auf der Oberseite des Federbalkens, die exakt der verdeckten Abtastspitze gegenüberliegend angeordnet ist, wäre als Justierhilfe für die exakte Ausrichtung des Federbalkens, insbesondere der Abtastspitze hilfreich und daher wünschenswert.

SPM-Sonden mit Markierung als Justierhilfe sind aus dem Stand der Technik bereits bekannt. Beispielhaft wird auf die Patentdokumente EP 0 394 962 A, JP 10 123 154 A, US 5,883,38.7 A, JP 2003-315 238 A und JP 09-204 898 A verwiesen.

Die EP 0 394 962 A offenbart ein Rasterkraftmikroskop, welches ein optisches Beobachtungssystem aufweist, das eine Beobachtung der Probenoberfläche und des freien Endteils des Federbalkens der verwendeten SPM-Sonde erlaubt. Das Endteil weist auf der der Probe abgewandten Seite des Federbalkens eine erhabene Markierung auf, die in der Lage der Abtastspitze der Sonde exakt entspricht und für die Positionierung der Abtastspitze verwendet werden kann. Die Markierung enthält ein Material, das auf dem freien Endteil abgeschieden worden ist.

Aus der JP 10 123 154 A ist ebenfalls eine SPM-Sonde mit einer Abtastspitze und einer der Abtastspitze lagegenau zugeordneten Markierung auf der der Abtastspitze gegenüberliegenden Seite des Federbalkens bekannt. Die Markierung ist als kugelhaubenförmige Vertiefung ausgeführt.

Die US 5,883,387 A lehrt eine weitere gattungsgemäße SPM-Sonde mit einer als Vertiefung ausgebildeten Markierung und das zugehörige Herstellungsverfahren. Der Federbalken und die Abtastspitze weisen unterschiedliche Materialien auf, wobei die Abtastspitze den Federbalken durchsetzt und die Markierung trägt.

Die JP 2003-315 238 A und die JP 09-204 898 A behandeln weitere Ausführungsformen von SPM-Sonden, bei der der Federbalken eine die Position der Abtastspitze kennzeichnende Markierung auf der Oberseite aufweist. Die JP 2003-315 238 offenbart eine als Vertiefung oder als Erhöhung ausgebildete Markierung, die mittels Ätztechniken direkt auf der Oberseite des Federbalkens erzeugt wird. Die JP 09-204 898 beschreibt einen Federbalken, bei der die Abtastspitze als zur Balkenoberseite offene Hohlspitze ausgebildet ist.

Durch eine solche Markierung zur Lokalisierung der Abtastspitze wird das Auffinden kleinster zu untersuchender Strukturen erheblich vereinfacht und beschleunigt. Durch die exakte Kenntnis der Abtastspitzenposition können großflächige Abtastungen der Probenoberfläche zur Lokalisierung des interessierenden Untersuchungsgebietes und ein damit verbundener erheblicher Spitzenabrieb vermieden werden. Das zu untersuchende Objekt kann direkt mit hoher Präzision angefahren und mit der noch vorhandenen ursprünglichen Abtastspitzenqualität untersucht werden.

Ausgehend von dem vorstehend beschriebenen Stand der Technik liegt der Erfindung die Aufgabe zugrunde, ein Verfahren vorzuschlagen, mit dem die Abtastspitze und die Markierung in einem beliebigen Material hergestellt werden können. Dabei soll die Abtastspitze und die Markierung gleichzeitig oder nacheinander auf der Unter- bzw. Oberseite des Federbalkens mit exakter Ausrichtung zueinander erzeugt werden.

Diese Aufgabe wird erfindungsgemäß durch ein Herstellungsverfahren für eine SPM-Sonde mit den Merkmalen des Patentanspruchs 1 gelöst. Weitere vorteilhafte Ausführungsformen sind den rückbezogenen Patentansprüchen zu entnehmen.

Die nach dem erfindungsgemäßen Verfahren hergestellte SPM-Sonde weist an dem Federbalken auf der der Abtastspitze gegenüberliegenden Seite eine Markierung auf, die die Position der Abtastspitze eindeutig kennzeichnet. Die der Abtastspitze abgewandte Seite des Federbalkens wird im folgenden als Oberseite und die der Probe zugeordnete Seite als Unterseite des Federbalkens bezeichnet. Die Markierung zur Visualisierung der Abtastspitzenposition auf der Federbalken-Oberseite ist dabei als Erhöhung des Federbalkens ausgebildet, wobei die Abtastspitze und die Markierung durch Materialabscheidung mittels fokussierter Teilchenstrahlen auf dem Federbalken aufgewachsen sind und aus einem identischen Material bestehen. Die Abtastspitze und die Markierung werden vorteilhafterweise in einem gemeinsamen Verfahrensschritt mittels einer teilchenstrahlinduzierten Materialabscheidung selbstjustierend gefertigt.

Die vorstehend beschriebene SPM-Sonde kann mittels dem nachfolgend beschriebenen erfindungsgemäßen Verfahren einfach hergestellt werden. Dabei wird das Halteelement mit dem Federbalken in herkömmlicher, dem Fachmann bekannter Weise vorgefertigt und anschließend die Abtastspitze und die Markierung durch die teilchenstrahlinduzierte Materialabscheidung, basierend auf einem gasinduzierten Prozess, auf den Federbalken erzeugt. Als Teilchenstrahl kann ein Elektronenstrahl oder ein Ionenstrahl verwendet werden. Die Abtastspitze und die Markierung werden vorzugsweise selbstjustierend gefertigt, indem die Ausrichtung des Teilchenstrahls, der den Federbalken beaufschlagt, gegenüber dem Federbalken bei der Erzeugung der Abtastspitze und der Markierung nicht verändert wird. Dabei kann für die Abtastspitze und die Markierung ein mit dem Federbalken übereinstimmendes oder ein von dem Federbalken abweichendes Material verwendet werden.

Bei dem erfindungsgemäßen Herstellungsprozess einer SPM-Sonde, bei der der Federbalken aus einem ersten Material, beispielsweise wie üblich aus Silizium gefertigt ist, und die Abtastspitze und die Markierung durch gasinduzierte Materialabscheidung in einem gemeinsamen Verfahrensschritt erzeugt sind, erfolgt die Fertigung gemäß den folgenden Verfahrensschritten:
- Bereitstellen einer nach einem bekannten Verfahren hergestellten SPM-Sonde, mit einem Halteelement und einem daran befestigten Federbalken ohne Abtastspitze und Markierung;
- Einleiten einer lokalen teilchenstrahlinduzierten Materialabscheidung auf dem Federbalken, basierend auf einem gasinduzierten Prozess, wobei der Teilchenstrahl, vorzugsweise ein Elektronenstrahl, auf diejenige Stelle der Unterseite des Federbalkens gerichtet ist, an der die Abtastspitze entstehen soll;
- Einstellen der Strahlparameter des Teilchenstrahls derart, dass die Materialabscheidung als Markierung bevorzugt auf der Oberseite des Federbalkens durch vorwärts gestreute Sekundärteilchen erfolgt; und
- Verändern der Strahlparameter des Teilchenstrahls derart, dass die Materialabscheidung als Abtastspitze bevorzugt auf der Unterseite des Federbalkens durch rückwärts gestreute Sekundärteilchen, der Markierung exakt gegenüberliegend, erfolgt.

Gemäß dem erfindungsgemäßen Verfahren zur Ausbildung der Abtastspitze und der Markierung wird zunächst mittels konventioneller Verfahren eine Sonde bestehend aus Halteelement und Federbalken realisiert. Anschließend wird ein Teilchenstrahl, vorzugsweise ein Elektronenstrahl, auf den Federbalken fokussiert. Strahlleistung und Fokusebene werden dabei so gewählt, dass ein durch gestreute Sekundärteilchen induziertes, lokales Schichtwachstum aus der Gasphase bevorzugt an der Oberseite des Federbalkens erfolgt und sich eine Markierung ausbildet. Danach werden

Strahlleistung und Fokusebene derart geändert, dass die Abscheidung bevorzugt auf der Unterseite des Federbalkens erfolgt und sich eine geeignete Abtastspitze bildet. Bei der Anpassung der Strahlparameter bleibt die laterale Position des Strahls auf dem Federbalken unverändert, sodass die laterale Position der Markierung exakt mit der der Abtastspitze übereinstimmt.

Nachfolgend wird die Erfindung anhand einer in der Zeichnung dargestellten SPM-Sonde und des in der Zeichnung dargestellten zugeordneten erfindungsgemäßen Verfahrensablauf zur Herstellung der SPM-Sonde näher erläutert. Weitere Merkmale der Erfindung ergeben sich aus der folgenden Beschreibung der Ausführungsbeispiele der Erfindung in Verbindung mit den Ansprüchen und der beigefügten Zeichnung. Es zeigen:
- Figur 1: eine nach dem erfindungsgemäßen Verfahren hergestellte Sonde in perspektivischer Ansicht; und
- Figur 2: Fertigungsstufen (Figur 2a - 2d) der SPM-Sonde aus Figur 1 in einer schematischen Darstellung.

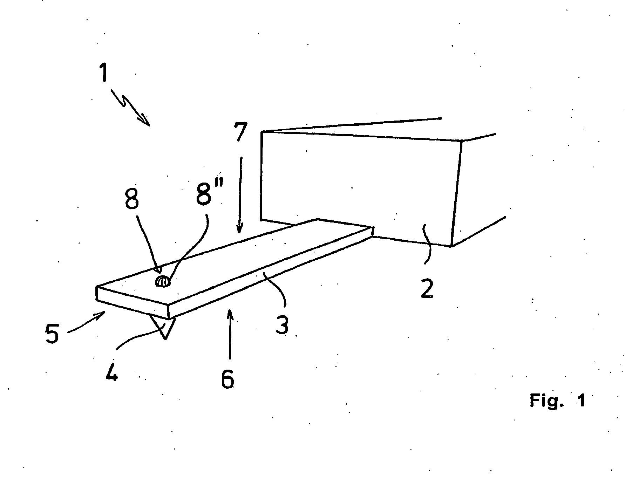

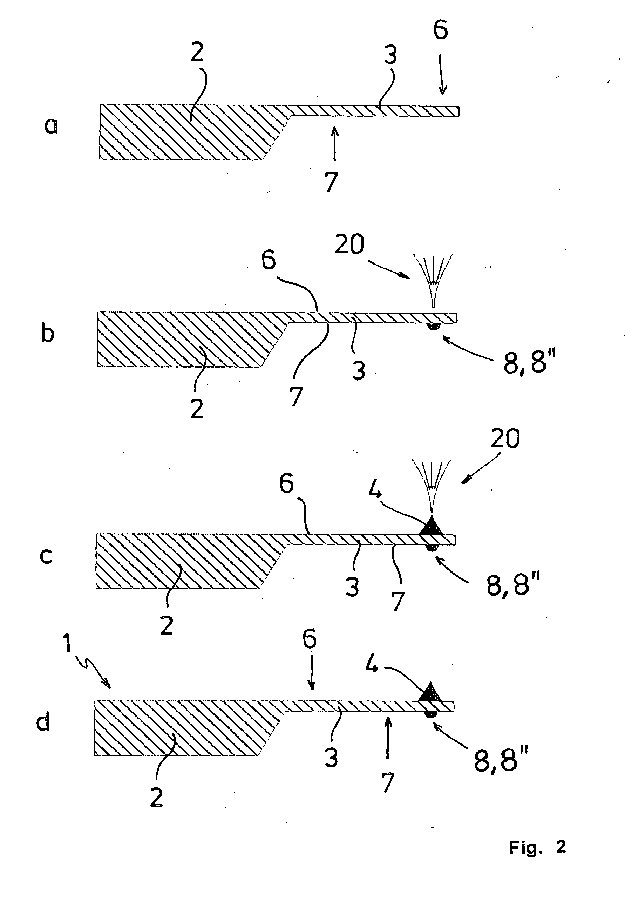

Die Figur 1 zeigt eine nach dem erfindungsgemäßen Verfahren hergestellte SPM-Sonde 1, mit einem Halteelement 2, einem Federbalken 3 und einer Abtastspitze 4. Die Abtastspitze 4 ist an dem freien Ende 5 des Federbalkens 3 auf einer Unterseite 6 angeordnet, die einer nicht in der Zeichnung dargestellten Probe zugeordnet ist. Auf einer der Unterseite 6 gegenüberliegenden Oberseite 7 des Federbalkens 3 ist eine Markierung 8 ausgebildet, deren Position exakt mit der Position der Abtastspitze 4 übereinstimmt. Die Markierung 8 ist eine Erhöhung 8", die durch gasinduzierte Materialabscheidung mittels einem fokussierten Teilchenstrahl aufgebracht ist. Die Figur 2 zeigt die wesentlichen Fertigungsstufen der in der Figur 1 dargestellten SPM-Sonde 1.

In der Figur 2 ist in den Figuren 2a bis 2d die Abfolge des erfindungsgemäßen Verfahrens zur Herstellung der in der Figur 2 dargestellten erfindungsgemäßen SPM-Sonde 1 dargestellt, bei der der Federbalken 3 aus einem ersten Material gefertigt ist, und die Abtastspitze 4 sowie die als Erhöhung 8" ausgebildete Markierung 8 durch gasinduzierte Materialabscheidung mittels einem fokussierten Teilchenstrahl hergestellt sind. Dabei kann für die Abtastspitze 4 und die Markierung 8 das erste Material oder ein anderes geeignetes Material verwendet werden.

Bei der Herstellung der SPM-Sonde 1 geht man von einer nach einem bekannten Verfahren hergestellten SPM-Sonde 1 gemäß der Figur 2a aus, die lediglich ein Halteelement 2 und einen Federbalken 3 aufweist. Die Herstellung der Abtastspitze 4 auf der Unterseite 6 des Federbalkens 3 und der erhabenen Markierung 8 auf der Oberseite 7 des Federbalkens 3 erfolgt durch teilchenstrahlinduzierte Materialabscheidung, basierend auf einem gasinduzierten Prozess. Dazu ist ein Teilchenstrahl 20, wie in den Figuren 2b, 2c dargestellt, auf die Unterseite 6 des Federbalkens 3 gerichtet und auf den Federbalken 3 fokussiert. Dabei werden zuerst die Fokusebene und die Strahlleistung derart gewählt, dass ein bevorzugtes lokales Schichtwachstum aus der Gasphase, wie der Figur 2b entnehmbar ist, durch vorwärts gestreute Sekundärteilchen induziert an der Oberseite 7 des Federbalkens 3 erfolgt und so die Markierung 8 als Erhöhung 8" zuerst ausgebildet wird.

Anschließend wird die Strahlleistung und die Strahlenergie derart geändert, dass die Materialabscheidung, wie die Figur 2c zeigt, bevorzugt auf der Unterseite 6 des Federbalkens 3 durch rückwärts gestreute Sekundärteilchen erfolgt und so die Abtastspitze 4 aufgebaut wird. Bei der Anpassung der Strahlparameter wird die Ausrichtung des Teilchenstrahls 20 nicht verändert, so dass die Position der Markierung 8 und der Abtastspitze 4 exakt bei der in der Figur 2d gezeigten fertiggestellten SPM-Sonde 1 übereinstimmen.

## Patentansprüche

1. Verfahren zur Herstellung einer SPM-Sonde (1), mit einem Halteelement (2), einem Federbalken (3), einer Abtastspitze (4) und mit einer als Erhöhung (8") ausgebildeten Markierung (8) auf der der Abtastspitze (4) gegenüberliegenden Seite des Federbalkens (3), die die Position der Abtastspitze (4) eindeutig kennzeichnet, wobei das Haltelement (2) mit dem Federbalken (3) in herkömmlicher Weise vorgefertigt wird und anschließend die Abtastspitze (4) und die Markierung (8) durch eine gasinduzierte Materialabscheidung auf dem Federbalken (3) erzeugt werden, **dadurch** gekennzeichnet, dass die Abtastspitze (4) und die Markierung (8) selbstjustierend mit den folgenden Schritten gefertigt werden:
A Bereitstellen einer nach einem bekannten Verfahren hergestellten SPM-Sonde (1), mit einem Halteelement (2) und einem daran befestigten Federbalken (3) ohne Abtastspitze (4) und Markierung (8);
B Einleiten einer lokalen teilchenstrahlinduzierten Materialabscheidung auf dem Federbalken (3), basierend auf dem gasinduzierten Prozess, wobei der Teilchenstrahl (20), vorzugsweise ein Elektronenstrahl, auf diejenige Stelle der Unterseite (6) des Federbalkens (3) gerichtet und fokussiert ist, an der die Abtastspitze (4) entstehen soll.
C Einstellen der Strahlparameter des Teilchenstrahls (20) derart, dass die Materialabscheidung als Markierung (8) bevorzugt auf der Oberseite (7) des Federbalkens (3) durch vorwärts gestreute Sekundärteilchen erfolgt.
D Verändern der Strahlparameter des Teilchenstrahls (20) derart, dass die Materialabscheidung als Abtastspitze (4) bevorzugt auf der Unterseite (6) des Federbalkens (3) durch rückwärts gestreute Sekundärteilchen, der Markierung (8) exakt gegenüberliegend erfolgt.

2. Verfahren nach Anspruch 1, **dadurch gekennzeichnet, dass** als Material für die Abscheidung der Abtastspitze (4) und der Markierung (8) ein mit dem Federbalken (3) übereinstimmendes Material verwendet wird.

3. Verfahren nach Anspruch 1, **dadurch gekennzeichnet, dass** als Material für die Abscheidung der Abtastspitze (4) und der Markierung (8) ein von dem Federbalken (3) abweichendes Material verwendet wird.

4. Verfahren nach Anspruch 1, **dadurch gekennzeichnet, dass** zur Bestimmung des Ortes der bevorzugten Materialabscheidung im wesentlichen die Strahlparameter Strahlleistung und Fokusebene des Teilchenstrahls (20) verwendet werden.

## Claims

1. A method of producing a SPM probe (1) including a holding element (2), a cantilever (3), a scanning tip (4) and a marking (8) in the form of a protrusion (8") on the side of the cantilever (3) opposite to the scanning tip (4), which positively identifies the position of the scanning tip (4), wherein the holding element (2) with the cantilever (3) is prefabricated cantilever in a conventional manner and the scanning tip (4) and the marking (8) are subsequently produced on the cantilever (3) by gas-induced material deposition, **characterised in that** the scanning tip (4) and the marking (8) are fabricated in a self-aligning manner with the following steps:
A providing a SPM probe (1), produced by a known method, with a holding element (2) and a cantilever (3) fastened to it without a scanning tip (4) and marking (8);
B initiating a local particle beam-induced material deposition on the cantilever (3), based on the gas-induced process, wherein the particle beam (20), preferably an electron beam, is directed and focused onto that position of the underside (6) of the cantilever (3) at which the scanning tip (4) is to be formed.
C adjusting the beam parameters of the particle beam (20) such that the material deposition in the form of a marking (8) occurs, preferably on the upper surface (7) of the cantilever (8) by forward scattered secondary particles.
D altering the beam parameters of the particle beam (20) such that the material deposition in the form of a scanning tip (4) occurs, preferably on the underside (6) of the cantilever (3), precisely opposite to the marking (8) by rearward scattered secondary particles.

2. A method as claimed in claim 1, **characterised in that** a material consistent with the cantilever (3) is used as the material for the deposition of the scanning tip (4) and the marking (8).

3. A method as claimed in claim 1, **characterised in that** a material differing from the cantilever (3) is used as the material for the deposition of the scanning tip (4) and the marking (8).

4. A method as claimed in claim 1, **characterised in that** in order to determine the location of the preferred material deposition the beam parameters beam power and focal plane of the particle beam (20) are substantially used.

## Revendications

1. Procédé de fabrication d'une sonde SPM (1), avec un élément de support (2), une poutre élastique (3), une pointe de balayage (4) et avec une marque (8) réalisée sous la forme d'un bossage (8") du côté de la poutre élastique (3) opposé à la pointe de balayage (4), qui identifie de façon précise la position de la pointe de balayage (4), l'élément de support (2) étant préfabriqué avec la poutre élastique (3) de façon traditionnelle et la pointe de balayage (4) et la marque (8) étant ensuite produites par un dépôt de matière induit par gaz sur la poutre élastique (3), **caractérisé en ce que** la pointe de balayage (4) et la marque (8) sont réalisées de façon auto-alignée au moyen des étapes suivantes :
A mise à disposition d'une sonde SPM (1) fabriquée selon un procédé connu, avec un élément de support (2) et une poutre élastique (3) fixée sur celui-ci, sans pointe de balayage (4) ni marque (8) ;
B déclenchement d'un dépôt de matière local induit par un faisceau de particules sur la poutre élastique (3), sur la base d'un processus induit par gaz, le faisceau de particules (20), de préférence un faisceau d'électrons, étant dirigé et focalisé sur le point de la face inférieure (6) de la poutre élastique (3) où la pointe de balayage (4) doit être formée ;
C réglage des paramètres de faisceau du faisceau de particules (20) de façon que le dépôt de matière soit effectué sous la forme d'une marque (8), de préférence sur la face supérieure (7) de la poutre élastique (3), par des particules secondaires diffusées vers l'avant ;
D modification des paramètres de faisceau du faisceau de particules (20) de façon que le dépôt de matière soit effectué sous la forme d'une pointe de balayage (4), de préférence sur la face inférieure (6) de la poutre élastique (3), exactement à l'opposé de la marque (8) par des particules secondaires diffusées vers l'arrière.

2. Procédé selon la revendication 1, **caractérisé en ce que** l'on utilise comme matière pour le dépôt de la pointe de balayage (4) et de la marque (8) une matière correspondante à celle de la poutre élastique (3).

3. Procédé selon la revendication 1, **caractérisé en ce que** l'on utilise comme matière pour le dépôt de la pointe de balayage (4) et de la marque (8) une matière différente de celle de la poutre élastique (3).

4. Procédé selon la revendication 1, **caractérisé en ce que** pour déterminer l'emplacement du dépôt de matière préféré, on utilise essentiellement les paramètres de faisceau puissance du faisceau et plan focal du faisceau de particules (20).
